(19) Europäisches Patentamt
European Patent Office
Office européen des brevets

(11) **EP 2 306 459 A2**

(12) **EUROPEAN PATENT APPLICATION**
published in accordance with Art. 153(4) EPC

(43) Date of publication:
**06.04.2011 Bulletin 2011/14**

(51) Int Cl.:
***G11B 20/10*** *(2006.01)*

(21) Application number: **09766814.9**

(22) Date of filing: **16.06.2009**

(86) International application number:
**PCT/KR2009/003215**

(87) International publication number:
**WO 2009/154389 (23.12.2009 Gazette 2009/52)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **17.06.2008   KR 20080056808**

(71) Applicant: **LG Electronics Inc.**
**Seoul 150-721 (KR)**

(72) Inventors:
• **LEE, Jae Sung**
**Seoul 137-724 (KR)**
• **SEO, Jeong Kyo**
**Seoul 137-724 (KR)**
• **LEE, Seong Hun**
**Seoul 137-724 (KR)**
• **KWAK, Bong Sik**
**Seoul 137-724 (KR)**

(74) Representative: **Katérle, Axel**
**Wuesthoff & Wuesthoff**
**Patent- und Rechtsanwälte**
**Schweigerstraße 2**
**81541 München (DE)**

(54) **RECORDING MEDIUM, AND RECORDING/REPRODUCING METHOD AND RECORDING/ REPRODUCING APPARATUS FOR RECORDING MEDIUM**

(57)     The present invention provides a recording/reproducing method for a recording medium including a data recording layer and a user information recording layer, wherein the recording/reproducing method includes the steps of: receiving inputted user information; determining whether the inputted user information matches the user information recorded on the user information recording layer of the recording medium; and recording data onto the data recording layer of the recording medium, or reproducing data of the data recording layer, in accordance with the result of the determination.

FIG. 2

**Description**

**[TECHNICAL FIELD]**

The present invention relates to a recording medium, and recording/reproducing method and recording/reproducing apparatus for a recording medium. In more detail, the present invention relates to a recording medium, and recording/reproducing method and recording/reproducing apparatus for a recording medium, which can secure security.

**[BACKGROUND ART]**

Presently, the recording medium is at a level of storing 25GB per one layer owing to development of various technologies. And, as far as a drive is provided, every person can make access to the recording medium and read a data therefrom.

However, due to such accessibility and interchangeability, a weak point is indicated in view of security of the recording medium. It becomes that any one can read and copy the data from the recording medium, and, at the time the recording medium is thrown away too, there has been inconvenience of complete erasure of the data from the recording medium.

In a case the recording medium is distributed, with contents stored therein, importance of the security is high. A person who provides the contents desires to provide information only to a person who buys the contents properly. However, such easy accessibility and interchangeability of the recording medium makes easy copy and distribution of the contents to a plurality of persons.

Consequently, a variety of methods have been suggested, for providing security to the data, examples of which are a method for providing security by means of a decoder embodied by software, and a method for providing a hardware security key at a PC. However, problems are pointed in that the software method can be cracked easily, and the hardware method requires additional devices.

Accordingly, device and method for enhancing security of the recording medium by using a simple method is in need.

**[DISCLOSURE OF INVENTION]**

**[TECHNICAL PROBLEM]**

To solve the problems, an object of the present invention is to provide a recording medium, and recording/reproducing method and recording/reproducing apparatus for a recording medium, which can secure security of a data in a recording medium by using simple method and apparatus.

**[TECHNICAL SOLUTION]**

To achieve these objects and other advantages and in accordance with the purpose of the invention, as embodied and broadly described herein, a recording/reproducing method for a recording medium having a data recording layer and a user information recording layer, includes the steps of receiving user information, determining whether the user information received thus matches user information recorded on the user information recording layer and recording/reproducing a data on/from the data recording layer based on a result of determination.

And, the user information is user finger print information.

And, the step of receiving user information includes the step of marking a finger print on the recording medium.

And, the step of receiving user information includes the step of receiving the finger print from a user information applier.

And, in another aspect of the present invention, a recording/reproducing method for a recording medium having a data recording layer and a user information recording layer, includes the steps of recording user information on a user information recording layer of the recording medium, applying present user information when recording/reproducing a data to/from the recording medium, and recording/reproducing the data on/from the data recording layer based on whether the present user information received thus matches user information recorded on the user information recording layer of the recording medium.

And, the user information is user finger print information.

And, the step of recording user information includes the steps of receiving the user finger print information from a user information applier, and recording the finger print information received thus on the user information recording layer of the recording medium.

And, the step of recording the finger print information includes the steps of marking the finger print on the recording medium, obtaining the finger print information by processing the finger print marked thus using a signal into a data, and recording the finger print information on the user information recording layer of the recording medium.

And, the step of obtaining the finger print information by processing the finger print marked thus using a signal into a data includes the step of using a RF signal.

And, in another aspect of the present invention, a recording/reproducing apparatus for a recording medium having a data recording layer and a user information recording layer, includes a pick-up unit for recording/reproducing a data and user information, and retrieving the user information received at the recording medium, and a control unit for controlling the pick-up unit to determine whether the user information received thus matches user information recorded on the user information recording layer, and record/reproduce the data on/from the data recording layer based on a result of determination.

And, the user information is user finger print information.

And, in another aspect of the present invention, a recording/reproducing apparatus for a recording medium having a data recording layer and a user information recording layer, includes a pick-up unit for recording/reproducing a data and a user information, a user information input unit for receiving the user information, and a control unit for controlling the pick-up unit to determine whether the user information received from the user information input unit matches user information recorded on the user information recording layer, and to record/reproduce the data on/from the data recording layer based on a result of determination.

And, the user information is user finger print information.

In another aspect of the present invention, a recording/reproducing apparatus for a recording medium having a data recording layer and a user information recording layer, includes a pick-up unit for recording/reproducing a data and a user information, and a control unit for controlling the pick-up unit based on whether user information recorded on the user information recording layer of the recording medium matches received user information, to record/reproduce the data on/from the data recording layer of the recording medium.

And, the user information is user finger print information.

And, the apparatus further includes a user information input unit for receiving user information.

And, the control unit controls the pick-up unit to receive the user finger print information by using the user information input unit and record the finger print information received thus on the user information recording layer of the recording medium.

And, the control unit controls the pick-up unit to obtain finger print information by processing the finger print marked on the recording medium using a signal into a data, and record the finger print information on the user information recording layer of the recording medium.

And, in another aspect of the present invention, a recording medium having a plurality of recording layers, includes a data recording layer for recording/reproducing a data thereon/therefrom, and a user information recording layer for recording/reproducing user information thereon/therefrom.

And, the user information is user finger print information.

In another aspect of the present invention, a recording/reproducing method for a recording medium includes the steps of registering user information on a recording medium, receiving user information at the recording medium when a data is recorded/reproduced on/from the recording medium, determining whether the user information received thus matches user information registered on the recording medium, and determining whether the data is recorded/reproduced on/from the recording medium based on whether the two pieces of user information are matched.

And, the step of registering user information on a recording medium includes the steps of receiving finger print information from a user information applier, and storing the finger print information received thus in the recording medium.

And, the step of registering user information on a recording medium includes the steps of marking a finger print on the recording medium initially, and processing the finger print using a signal into a data and storing the data in the recording medium as finger print information.

And, in another aspect of the present invention, a recording/reproducing method for a recording medium includes the steps of registering user information on authentication software, receiving user information at the recording medium when a data is recorded/reproduced on/from the recording medium, determining whether the user information received thus matches user information registered on the authentication software, and determining whether the data is recorded/reproduced on/from the recording medium based on whether the two pieces of user information are matched.

And, in another aspect of the present invention, a recording/reproducing apparatus for a recording medium includes a pick-up unit for registering user information on the recording medium and recognizing the user information registered on the recording medium when a data is recorded/reproduced to/from the recording medium, and a control unit for determining whether received user information matches the user information registered on the recording medium, and determining whether the data is recorded/reproduced on/from the recording medium based on whether the two pieces of user information are matched.

And, the registration of user information on the recording medium is reception of finger print information from an external device and storage of the finger print information received thus on the recording medium.

And, the registration of user information on the recording medium is marking a finger print on the recording medium initially, processing of the finger print marked thus using a signal into a data, and storage of the data on the recording medium as finger print information.

In another aspect of the present invention, a recording/reproducing apparatus for a recording medium includes a pick-up unit for registering user information on an authentication program and recognizing the user information inputted to the recording medium when a data is recorded/reproduced to/from the recording medium, and a control unit for determining whether received user information matches the user information registered on the authentication program, and determining whether the data is recorded/reproduced on/from the recording medium based on whether the two pieces of user information are matched.

**[ADVANTAGEOUS EFFECTS]**

Since a unique characteristic only of a specified user is used in the recording medium, and the recording/ reproducing method and recording/reproducing apparatus for a recording medium safety of security can be secured.

And, since the security can be secured only by changing or adding some parts of a related art system, the present invention is favorable in view of a cost.

The interchangeability with the related art recording/reproducing apparatus permits the present invention to put into production, quickly.

**[BRIEF DESCRIPTION OF THE DRAWINGS]**

FIG. 1 illustrates a perspective view showing a method for applying user finger print information to a recording medium in accordance with a preferred embodiment of the present invention.

FIG. 2 illustrates a block diagram of a recording/reproducing apparatus for a recording medium in accordance with a preferred embodiment of the present invention.

FIG. 3 illustrates a block diagram of a pick-up unit in a recording/reproducing apparatus in accordance with a preferred embodiment of the present invention.

FIG. 4 illustrates perspective views each showing a configuration of an actuator and a sled in a recording/ reproducing apparatus in accordance with a preferred embodiment of the present invention.

FIG. 5 illustrates schematic views showing a relation between a light received at a light receiving unit in accordance with a preferred embodiment of the present invention and a focus error signal (FES) by using the light, respectively.

FIG. 6 illustrates a graph showing a focus error signal varied with approach of a pick-up unit to a recording medium in accordance with a preferred embodiment of the present invention.

FIG. 7 illustrates a graph showing a RF signal varied with approach of a pick-up unit to a recording medium in accordance with a preferred embodiment of the present invention.

FIG. 8 illustrates an example of a test in which a finger print applied to a surface of a recording medium is processed as a data by using a RF signal.

FIG. 9 illustrates a flow chart showing the steps of a recording/reproducing method for a recording medium in accordance with a preferred embodiment of the present invention.

FIG. 10 illustrates a flow chart showing the steps of a recording/reproducing method for a recording medium in accordance with another preferred embodiment of the present invention.

FIG. 11 illustrates a flow chart showing the steps of a method for registering user information in accordance with a preferred embodiment of the present invention.

FIG. 12 illustrates a flow chart showing the steps of a method for registering user information in accordance with another preferred embodiment of the present invention.

FIG. 13 illustrates a recording medium in accordance with a preferred embodiment of the present invention.

FIG. 14 illustrates recording medium in accordance with another preferred embodiment of the present invention, respectively.

**[BEST MODE]**

The present invention provides a recording/reproducing method for a recording medium having a data recording layer and a user information recording layer, includes the steps of receiving user information, determining whether the user information received thus matches user information recorded on the user information recording layer, and

recording/reproducing a data on/from the data recording layer based on a result of determination.

And, the present invention provides a recording/reproducing method for a recording medium having a data recording layer and a user information recording layer, includes the steps of recording user information on a user information recording layer of the recording medium, applying present user information when recording/reproducing a data to/from the recording medium, and

recording/reproducing the data on/from the data recording layer based on whether the present user information received thus matches user information recorded on the user information recording layer of the recording medium.

The present invention provides a recording/reproducing apparatus for a recording medium having a data recording layer and a user information recording layer, includes a pick-up unit for recording/reproducing a data and user information, and retrieving the user information received at the recording medium, and a control unit for controlling the pick-up unit to determine whether the user information received thus matches user information recorded on the user information recording layer , and record/reproduce the data on/from the data recording layer based on a result of determination.

The present invention provides a recording/reproducing apparatus for a recording medium having a data recording layer and a user information recording layer, includes a pick-up unit for recording/reproducing a data and a user information, a user information input unit for receiving the user information, and a control unit for controlling the pick-up unit to determine whether the user information received from the user information input unit matches user information recorded on the user information recording layer, and to record/reproduce the data on/from the data recording layer based on a result of determination.

The present invention provides a recording/reproducing apparatus for a recording medium having a data recording layer and a user information recording layer, includes a pick-up unit for recording/reproducing a data and a user information, and a control unit for controlling the pick-up unit based on whether user information recorded on the user information recording layer of the recording medium matches received user information, to record/reproduce the data on/from the data recording layer of the recording medium.

The present invention provides a recording medium having a plurality of recording layers, includes a data recording layer for recording/reproducing a data thereon/therefrom, and a user information recording layer for recording/reproducing user information thereon/therefrom.

## [MODES FOR CARRYING OUT THE INVENTION]

A recording medium, and recording/reproducing method and recording/reproducing apparatus for a recording medium in accordance with preferred embodiments of the present invention will be described with reference to attached drawings.

Although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meaning of each term lying within.

In relation to this, in the present invention, "a recording/reproducing apparatus" is a general term for denoting a recording apparatus, a reproducing apparatus, and a recording/reproducing apparatus. And, in the present invention, "a recording/reproducing method" is a general term for denoting a recording method, a reproducing method, and a recording/reproducing method.

And, in the present invention, "a recording medium" is a general term for denoting all media each having a data recorded or recordable thereon, for an example, a disk, a magnetic tape, and so on, regardless of recording systems.

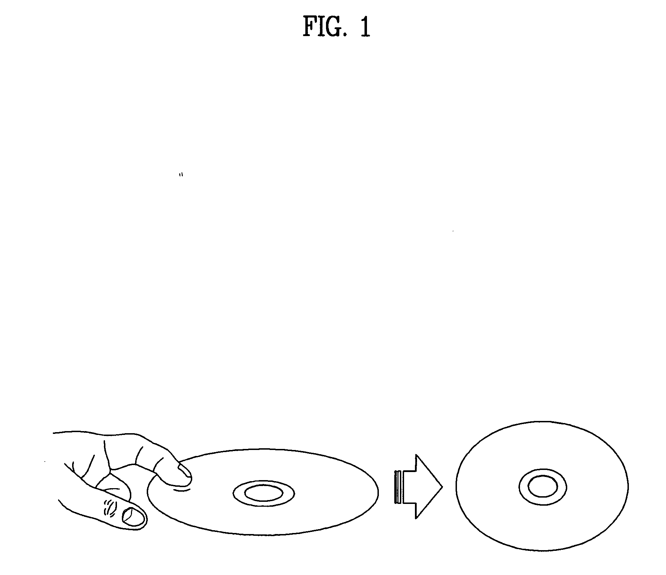

FIG. 1 illustrates a perspective view showing one of methods for applying user finger print information to a recording medium in accordance with a preferred embodiment of the present invention. Though there are various methods for applying user information, FIG. 1 illustrates a method for securing security of the data by a simple method of applying the user finger print information to the recording medium personally in accordance with a preferred embodiment of the present invention. However, this is one embodiment, and the present invention is not limited to this.

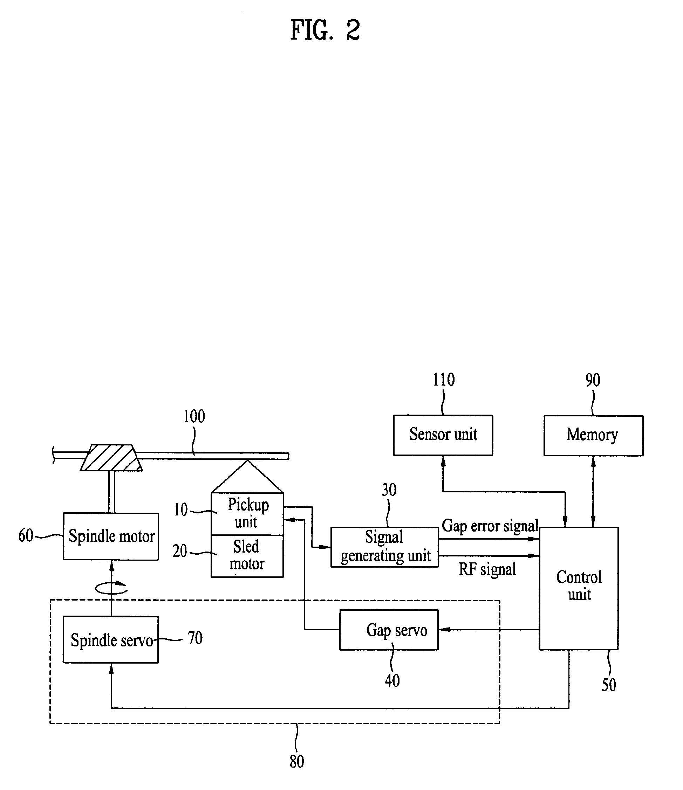

FIG. 2 illustrates a block diagram of a recording/reproducing apparatus for a recording medium in accordance with a preferred embodiment of the present invention.

Referring to FIG. 2, the recording/reproducing apparatus of the present invention includes a pick-up unit 10, and a control unit 50. And, the recording/reproducing apparatus can includes a signal generating unit 30, a servo unit 80 including a spindle servo 70, and a gap servo 40, a sled motor 20, a spindle motor 60, a memory 90, and a sensor unit 110.

The pick-up unit 10 directs a light to a recording medium, collects the light reflected or refracted at the recording medium to generate an electric signal. The electric signal can generates signal information on a vertical distance between the recording medium 110 and the pick-up unit 10, signal information whether the pick-up unit 10 maintains horizontal balance on a track of the recording medium 100 or not, and signal information whether the pick-up unit 10 is tilted relative to the recording medium 100 or not.

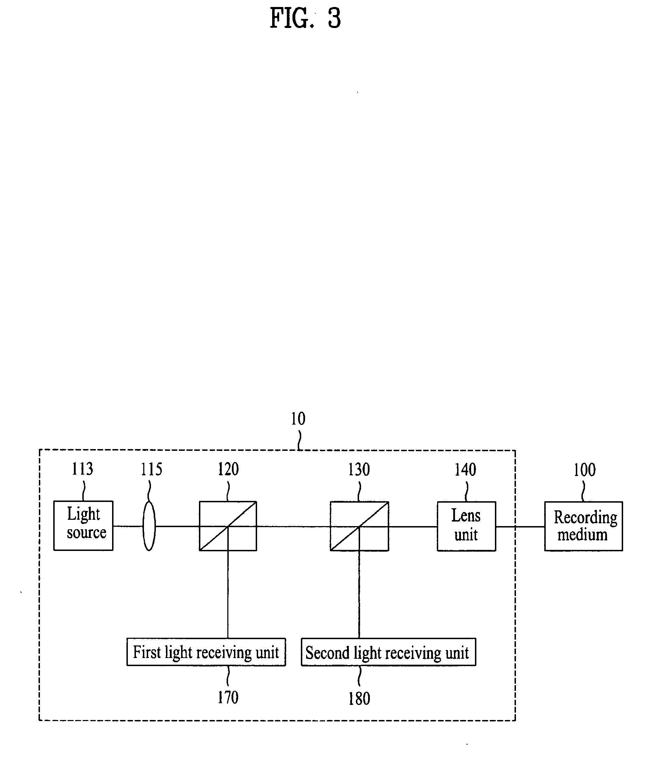

The pick-up unit 10 will be described in detail with reference to FIG. 3.

The signal generating unit 30 generates a reproducing signal (RF Signal), a Gap error signal GES, a focus error signal FES, and a tracking error signal TES. The GES is signal information for representing the vertical distance between the recording medium 100 and the pick-up unit 10, the FES is signal information for controlling the distance between the pick-up unit 10 and the recording medium 100 caused by vibration of a surface of the recording medium 100 since a position at which the light directs changes if the distance between the pick-up unit 10 and the recording medium 100 changes, the TES is signal information for representing positions of the recording medium 100 and the pick-up unit 10 on the track.

The gap servo 40 drives the actuator 5 with reference to the GES generated at the signal generating unit 30 under the control of the control unit 50, for controlling the distance between the recording medium 100 and the pick-up unit 10 in real time. The spindle servo 70 controls rotation of the recording medium 100 by driving the spindle motor 60 under the control of the control unit 50 with reference to the RF signal. The sled motor 20 is driven by a sled servo (not shown) for controlling the pick-up unit 10 in a radius direction. That is, the servo unit 80 serves to control a distance, a position and a direction of the pick-up unit 10 or the recording medium 100 under the control of the control unit 50 by using the signal information generated at the signal generating unit 30.

The sensor unit 110 serves to receive user information. Though there can be a variety of the user information, such as user finger print information, and user pupil information, the present invention will be described taking the user finger print information as an example. However, it is apparent that the present invention is not limited to the user finger print information. The sensor unit 110 can receive and forward the user finger print information to the control unit 50. And, the sensor unit 110 can receive and store the user finger print information at the memory 90. And, the sensor unit 110 can serve to process the user finger print information into a data. The sensor unit 110 can be described as a user information input unit.

The memory 90 serves to store data therein. In detail, the memory 90 can store the user information, and the user finger print information therein. And, the memory 90 can store the data to be recorded on the recording medium 100, and information to be recorded on the recording medium 100 other than the user information therein.

The control unit 50 serves to compare the user finger print information obtained from the finger print marked on the recording medium 100 to the user finger print information recorded on the user information recording layer of the recording medium 100 by using the RF signal of the signal information generated at the signal generating unit 30, to determine whether a present user is a proper user or not, and depending on a result of the determination, controls the pick-up unit 10 to record or reproduce a data. And, in order to record the user finger print information on the user information recording layer, if the finger print is marked on the surface of the recording medium 100, the control unit 50 processes the finger print into a data which is a pattern of changes of a RF signal between the pick-up unit 10 and the recording medium 100, and controls to record the data on the user information recording layer of the recording medium 100. And, in order to record the user finger print information on the user information recording layer, the control unit 50 controls to receive the user finger print information through the sensor unit 110 and record the user finger print information on the user information recording layer.

And, without processing the finger print marked on the surface of the recording medium 100 into the data, the control unit 50 can record a shape of the finger print on the user information recording layer of the recording medium 100 the same with the shape of the finger print marked on the surface of the recording medium 100. Preferably, a light scribe method is used. At the time the control unit 50 determines whether the present user is the proper user or not later, the control unit 50 can compare the shapes of the finger prints.

And, the control unit 50 can control to make kinds of the lights directed onto the user information recording layer and the data recording layer different from each other. The control unit 50 can record or reproduce information on/ from the user information recording layer by using a red light which has a long wavelength, and on/from the data recording layer by using a blue light which has a short wavelength. This is for reducing influences of noises and interferences among the layers by using light sources having focal points different from each other. Though the embodiment of the present invention describes that the recording medium has the user information recording layer and the data recording layer for writing relevant data separately, it is apparent that the present invention can be configured to record the user information and the data on the same layer.

And, the control unit 50 can compare the user finger print information obtained from the finger print marked on the recording medium 100 to the user information recording layer recorded on the memory 90 to determine whether the present user is the proper user or not by using the RF signal, to determine whether a data is to record or reproduce on/ from the recording medium or not.

FIG. 3 illustrates a block diagram of a pick-up unit 10 in a recording/reproducing apparatus in accordance with a preferred embodiment of the present invention. The pick-up unit 10 in FIG. 3 will be described with reference to a direction of travel of the light emitted from the light source in the pick-up unit 10, and with reference to a signal flow except above in detail.

In the present invention, the pick-up unit 10 includes a light source 113, a first splitting/mixing unit 120, a second splitting/mixing unit 130, a lens unit 140, a first light receiving unit 170, and a second light receiving unit 180. The pick-up unit 10 of the present invention can include a collimator lens 115. The collimator lens 115 serves to turn an incident light into a parallel light and forward the parallel light. The light from the light source 113 is incident on the first splitting/mixing unit 120, a portion of the light is reflected at the first splitting/mixing unit 120, and the other portion of the light passes through the first splitting/mixing unit 120 and is incident on the second splitting/mixing unit 130. The second splitting/mixing unit 130 passes a vertically polarized component of a linearly polarized light and reflects a horizontally polarized component of the linearly polarized light. The light passed through the second splitting/mixing unit 130 thus is incident on the lens unit 140. The light incident on an objective lens (not shown) of the lens unit forms an evanescent wave as the light passes through a near field forming lens (not shown). In detail, the light incident on the near field forming lens (not shown) at an angle greater than a critical angle is totally reflected at a surface of the near field forming lens (not shown) and the surface of the recording medium. The light incident on the near field forming lens (not shown) at an angle smaller than the critical angle is reflected at the surface of the recording medium. The evanescent wave formed in this process reaches to the recording layer of the recording medium to perform recording/reproduction. The light reflected at the recording medium 100 is incident on the second splitting/mixing unit 130 through the lens unit 140, again. A polarized light converting plane can be provided on a path through which the light is incident on the second splitting/mixing unit 130. The polarized light converting plane converts a direction of polarization of the light incident on the recording medium and the light reflected at the recording medium. Therefore, the only horizontally polarized component of the light passed by the second splitting/mixing unit 130 and incident on the recording medium 100 becomes to have a vertically polarized component when the horizontally polarized component of the light is reflected at the recording medium 100 and incident on the second splitting/mixing unit 130, again. Therefore, the reflected light of the vertically polarized component is reflected at the second splitting/mixing unit 130 and incident on the second light receiving unit 180. A portion of the reflected light incident on the second splitting/mixing unit 130 having a horizontally polarized component due to distortion of a direction of polarization passes through the second splitting/mixing unit 130. The reflected light passed thus is incident on the first splitting/mixing unit 120. The first splitting/mixing unit 120 passes a portion of the light incident thereon, and reflects the other portion of the light incident thereon. The light reflected at the first splitting/mixing unit 120 thus is incident on the first light receiving unit 170. The light receiving unit 170 or 180 receives a quantity of the light passed through the splitting/mixing unit 120 or 130 and provides an electric signal corresponding to the quantity of the light. The light receiving unit 170 or 180 has a multi-divided region. The light receiving unit 170 or 180 can have two photodetection devices PDA and PDB which divide the light receiving unit 170 or 180 into a specific regions, for an example, two, in a signal track direction or a radius direction of the recording medium 100. In this instance, the photodetection device PDA or PDB generates an electric signal a or b in proportion to the quantity of light received thus. Or, the light receiving unit 170 or 180 can have four photodetection devices PDA, PDB, PDC, and PDD which divide the light receiving unit 170 or 180 into a four regions in the signal track direction and the radius direction of the recording medium 100, respectively. The photodetection devices of the light receiving unit 170 or 180 are not limited to the embodiment, but can have a variety of variations and options as cases demand.

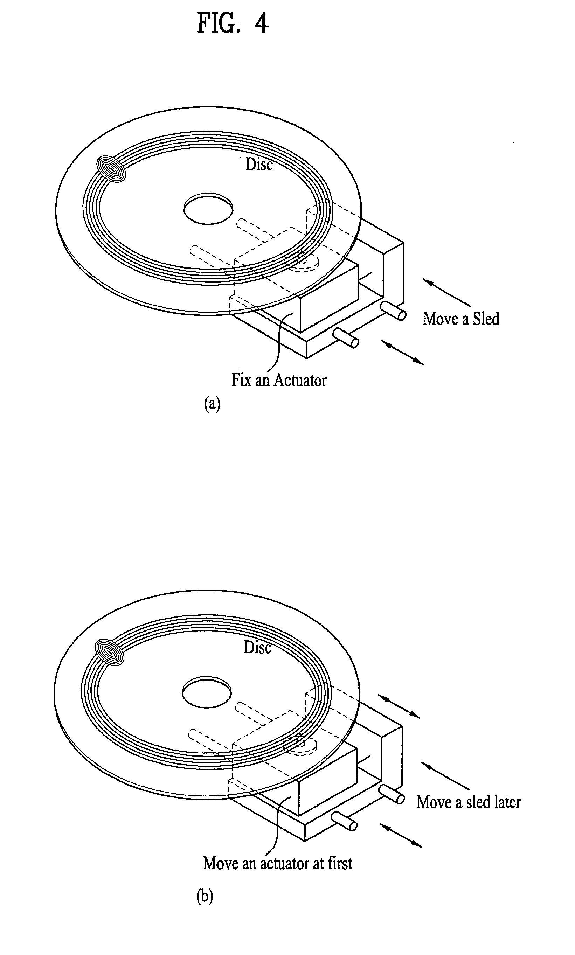

FIG. 4 illustrates perspective views each showing a configuration of an actuator 5 and a sled 7 in a recording/reproducing apparatus in accordance with a preferred embodiment of the present invention. In order to secure security, a method for scanning a user finger print information in the recording medium, and the recording/reproducing method and recording/reproducing apparatus for a recording medium of the present invention, a sled 7 moves a position of a pick-up by using a sled motor 20. Though the scanning of the user finger print information by moving the sled 7 is favorable for application to a product owing to a simple embodying method, since fine movement is difficult, accuracy can be a problem. In this instance, the problem of accuracy can be solved by a method in which the actuator 5 is moved within a moving range of the actuator 5, and, thereafter, the sled 7 is moved. Respective methods are applicable to suit to characteristics of respective products, selectively.

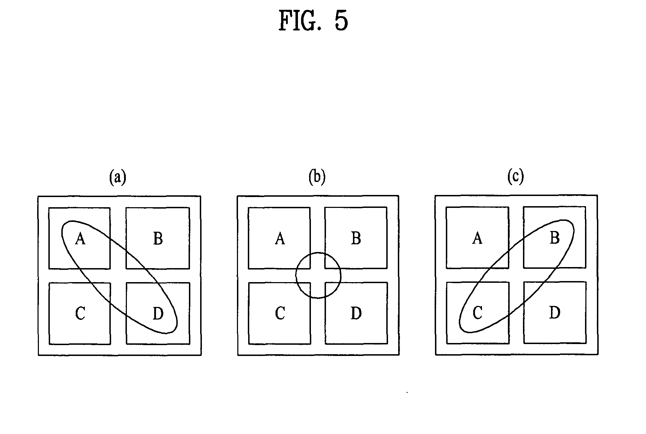

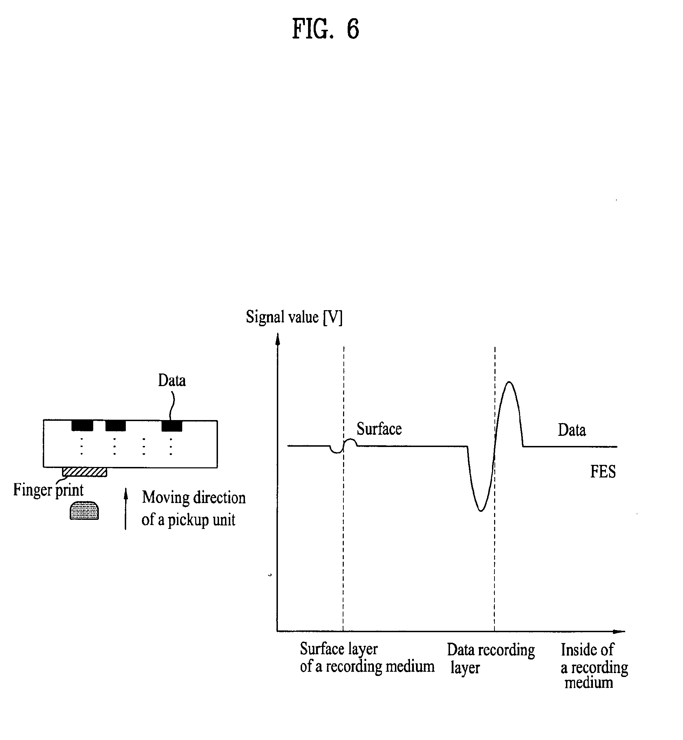

FIG. 5 illustrates schematic views showing a relation between a light received at a light receiving unit in accordance with a preferred embodiment of the present invention and a focus error signal (FES) which uses the light, respectively. As shown, if a focal point of a light is focused at a particular region, for an example, a recording layer of a recording medium accurately, the light has a circular shape of light reception as shown in FIG. 5. However, if the focal point of the light is focused at an upper side or a lower side of the recording layer away from the recording layer, the light has a shape of light reception as shown in FIGS. 4 or 6. If it is assumed that photoelectrically converted electric signals generated at light receiving devices A, B, C, and D are represented with a, b, c, and d, respectively, the focus error signal FES can be expressed with an equation shown below.

$$FES = (a + d) - (b + c) \ \text{---------------------} \ (1)$$

In a case the focal point of the light is focused at the recording layer of the recording medium, FES = 0. Therefore, by controlling such that a detected FES has a value of zero, or within an error range with reference to zero, focusing position control related to the focal point of the light is possible.

The present invention will be described on the assumption that the focusing control on the focal point of the light is made accurately such that the FES is zero or within the error range from zero. This is for minimizing an error taken place at other signals caused by influence from the error of the focusing control related to the focal point of the light.

And, the RF signal which records/reproduces the data is generated by adding all of signals from the photodetection devices, together. The RF signal generated thus can be expressed with an equation shown below.

$$RF = a + b + c + d \text{ -------------------------- } (2)$$

Since the RF signal corresponds to a sum of the electric signals equivalent to the quantity of light, the RF signal is proportional to a quantity of the reflected light received at the light receiving unit 170 or 180.

FIG. 6 illustrates a graph showing a focus error signal varied with approach of a pick-up unit 10 to a recording medium 100 in accordance with a preferred embodiment of the present invention. As shown in FIG. 6, it can be known that, when the pick-up unit 10 approaches to the recording medium 100, the FES forms a small S curve at a surface portion of the recording medium 100 and a great S waveform at a data recording surface. Though it is possible to make accurate focusing of the focal point at the surface of the recording medium by a variety of methods, the embodiment can maintain the focal point of the light to be focused at a surface layer with reference to a position at which variation of the FES forms the small S curve. However, this is one embodiment, and there are various methods for maintaining the focal point of the light at the surface layer of the recording medium.

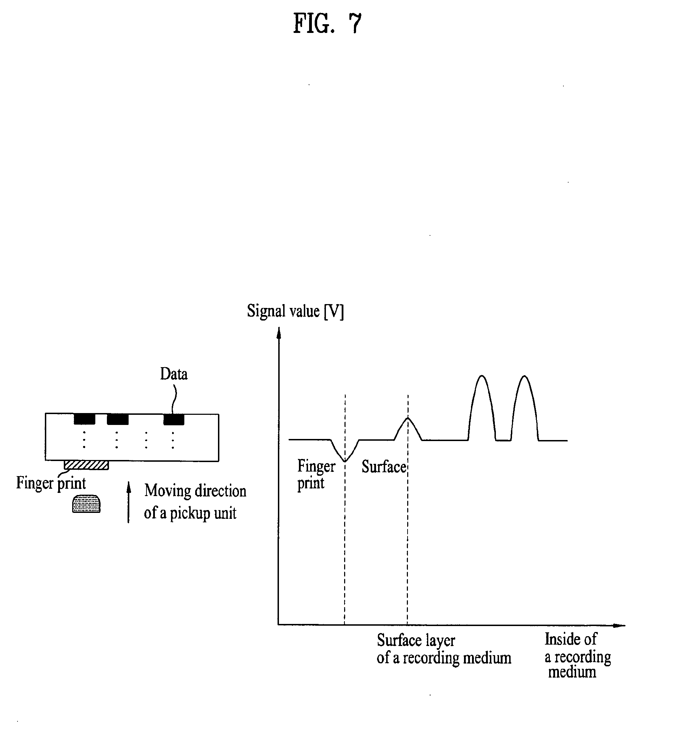

FIG. 7 illustrates a graph showing a RF signal varied with approach of a pick-up unit 10 to a recording medium 100 in accordance with a preferred embodiment of the present invention. As mentioned before, the RF signal is a signal value based on a reflected or refracted light from the recording medium during data recording/reproducing. In detail, the RF signal corresponds to a sum of a quantity of the light received at the light receiving unit 170.

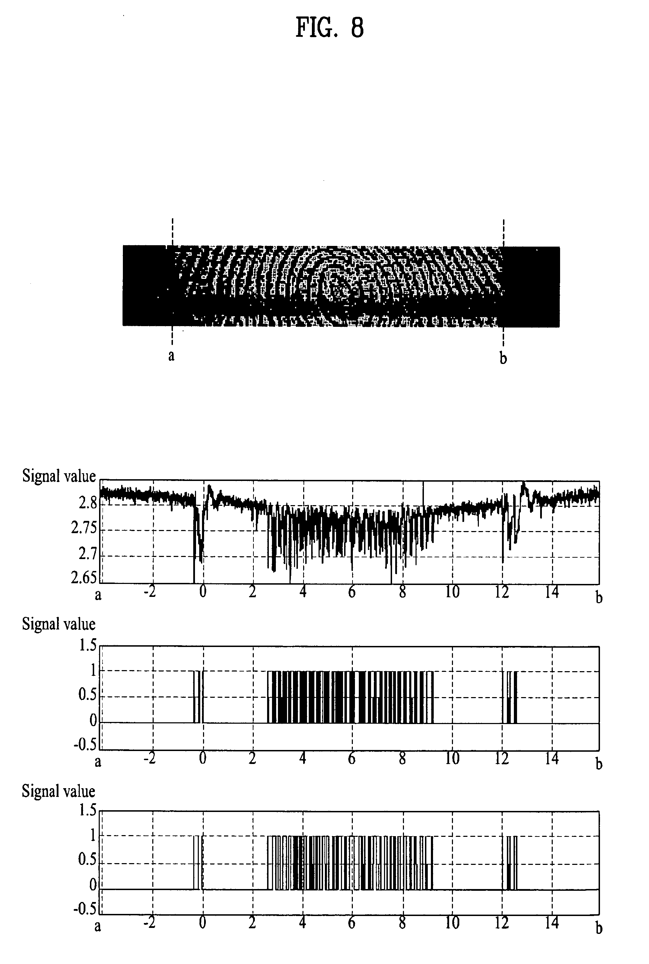

Referring to FIG. 7, when the pick-up unit 10 and the recording medium 100 maintain a gap greater than a certain distance, i.e., in a case the focal point of the light is in the air, the light reflected or refracted to the light receiving unit 170 has a fixed value. This is the same during the focal point is in the air. If the focal point is brought into contact with the finger print, making reflection or refraction of the light smaller than the case the focal point of the light is in the air owing to a lower refractive index, the quantity of the light received at the light receiving unit 170 is reduced, too. This reduces a value of the RF signal. If the focal point of the light is brought into contact with the surface layer of the recording medium, the reflected or refracted quantity of light increases temporarily owing to material characteristics of the surface layer of the recording medium 100, temporarily increasing the value of the RF signal at the surface layer of the recording medium 100, sharply. Thereafter, if the focal point passes through the surface layer, the value of the RF signal maintains an original fixed value until the focal point is brought into contact with the recording layer of the recording medium when the value of the RF signal increases sharply owing to a reflected or refracted light at the recording layer of the recording medium. That is, it is possible to maintain the focal point of the light to be in contact with the recording layer of the recording medium by using various signal information including the GES and the FES, which methods are apparent to persons skilled in this field of art. If the signal value of the RF signal projected from the surface layer of the recording medium is determined as a reference value, it can be known that the RF signal value has a negative value at the projected portion of the finger print in comparison to the reference value, and the RF signal value has the same value with the reference value at the recording layer and the surface layer. By utilizing this, it is be possible to differentiate the finger print projected portion from the surface layer with reference to a pattern of the RF signal value. It can be known that, if the surface layer of the recording medium having the user finger print information present thereto is scanned by utilizing this, the RF signal value appears in a shape of pattern shown in FIG. 8.

FIG. 8 illustrates an example of a test in which a finger print applied to a surface of a recording medium is processed as a data by using a RF signal.

Referring to FIG. 8, the finger print applied to the surface of the recording medium can be sorted as a groove portion of the finger print identical to the surface layer of the recording medium, and a projected portion of the finger print projected from the surface layer of the recording medium. In the finger print shown in FIG. 5, we can take that a white region is the projected portion of the finger print, and a black region is the groove portion of the finger print. The projected portion of the finger print is formed of a material different from a material of the surface layer of the recording medium. The material of the projected portion of the finger print has a characteristic of reducing a refractive index of the light incident thereon. Therefore, even though the RF signal value has a value the same with the surface layer of the recording medium at the groove portion of the finger print, the RF signal value has a value smaller than the RF signal value of the surface layer of the recording medium at the projected portion of the finger print owing to reduction of the quantity of the received light. Upon arranging such RF signal values, the arranged RF signal values can be converted to a particular data value. As one embodiment, as mentioned before, it is possible that, by setting the RF signal value at the surface layer of the recording medium as a reference value, and arranging a pattern of the signal values which are lower than the reference value, the patterns arranged thus can be made into a data. In the meantime, it is apparent that the RF signal values of the projected portion and the surface layer can be inverted by means of a structure of a signal generating circuit.

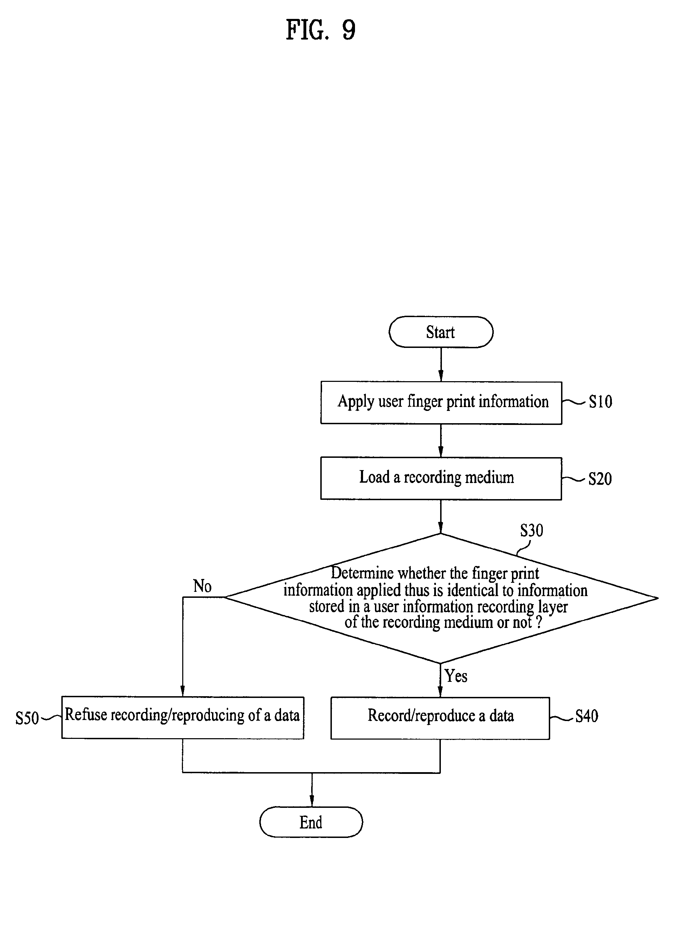

FIG. 9 illustrates a flow chart showing the steps of a recording/reproducing method for a recording medium 100 in accordance with a preferred embodiment of the present invention. Though the embodiment describes the user information taking the user finger print information as an example, it is apparent that the present invention is not limited to this.

For recording/reproducing, upon applying user finger print information to a surface of a recording medium 100 (S10), and loading the recording medium 100 on a recording/reproducing apparatus (S20), a control unit 50 of the recording/reproducing apparatus determines whether the user finger print information stored in a user information recording layer 200 of the recording medium is identical to the user finger print information applied to a surface of the recording medium (S30). If determined identical, the control unit 50 controls a pick-up unit 10, to reproduce a data from the data recording layer 220 of the recording medium or record a data on the data recording layer 220 of the recording medium (S40).

The user finger print information applied to the recording medium 100 is converted into a data by processing the user finger print information into a signal by using the RF signal. That is, of the user finger print information, a groove portion of the finger print is the same with the surface layer of the recording medium, and a projected portion of the finger print has a shape projected from the surface layer of the recording medium owing to foreign matters or the like. The projected portion of the finger print has a characteristic that a light refractive index thereof is lower than the surface layer of the recording medium. Owing to this, though the RF signal value at the groove portion of the finger print has a value the same with the RF signal value at the surface layer of the recording medium, the RF signal value at the projected portion of the finger print has a value lower than the RF signal value of the surface layer of the recording medium owing to reduction of the refractive index, reducing a received quantity of the light. By arranging the reduction patterns, the user finger print information can be processed into a data.

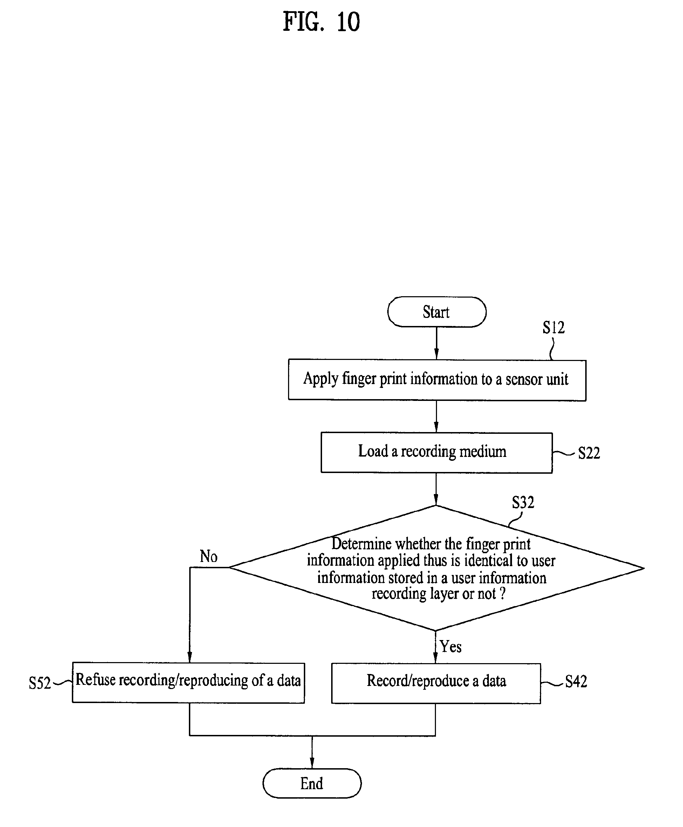

FIG. 10 illustrates a flow chart showing the steps of a recording/reproducing method for a recording medium 100 in accordance with another preferred embodiment of the present invention.

Upon applying the user finger print information to the sensor unit 110 of the recording/reproducing apparatus (S12), and loading the recording medium 100 on the recording/reproducing apparatus (S22), the control unit 50 of the recording/reproducing apparatus compares the user finger print information stored in the user information recording layer 200 of the recording medium 100 to the user finger print information applied to the sensor unit 110 to determine whether two pieces of the user finger print information are identical or not (S32). If it is determined that the two pieces of the user finger print information are identical, the control unit controls the pick-up unit to reproduce a data from the data recording layer 220 of the recording medium, or record a data on the data recording layer 220 of the recording medium (S42).

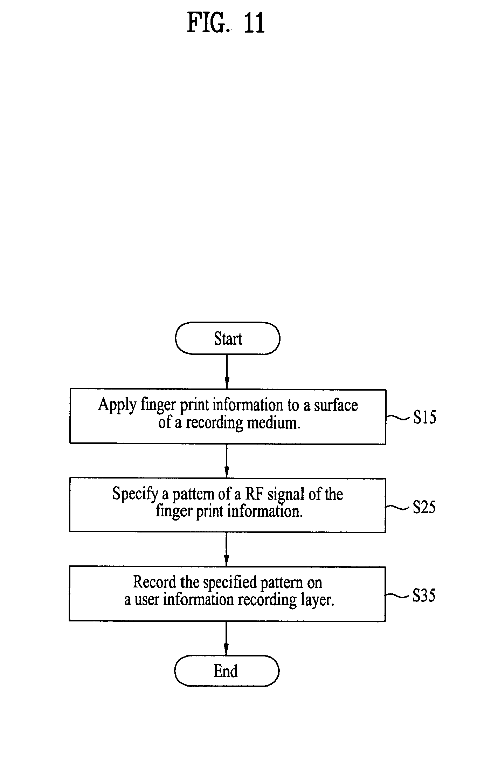

FIG. 11 illustrates a flow chart showing the steps of a method for registering user information in accordance with a preferred embodiment of the present invention. Though the embodiment describes the user information taking the user finger print information as an example, it is apparent that the present invention is not limited to this.

In order to register the user finger print information, the user finger print information is applied to a surface of the recording medium 100 (S15). A pattern signal value of the user finger print information is specified by using the RF signal (S25). The pattern signal value specified thus is recorded on the user information recording layer 200 of the recording medium (S35). A method for processing the user finger print information into a data by using the RF signal is identical to one mentioned before. And, it is apparent that, though the present invention is described with reference to the RF signal, the present invention is not limited to this, but can process the user finger print information into a data by using various signal information.

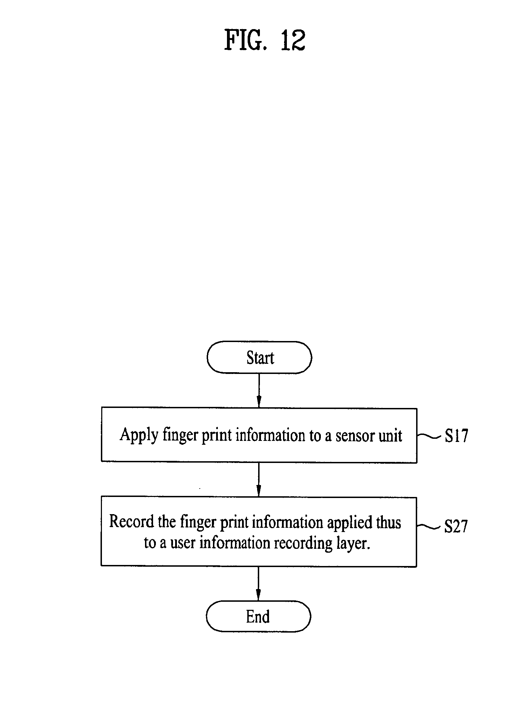

FIG. 12 illustrates a flow chart showing the steps of a method for registering user information in accordance with another preferred embodiment of the present invention.

Upon application of user finger print information to the sensor unit 110 (S17), the user finger print information applied to the sensor unit 110 thus is recorded on a user information recording layer 200 (S27).

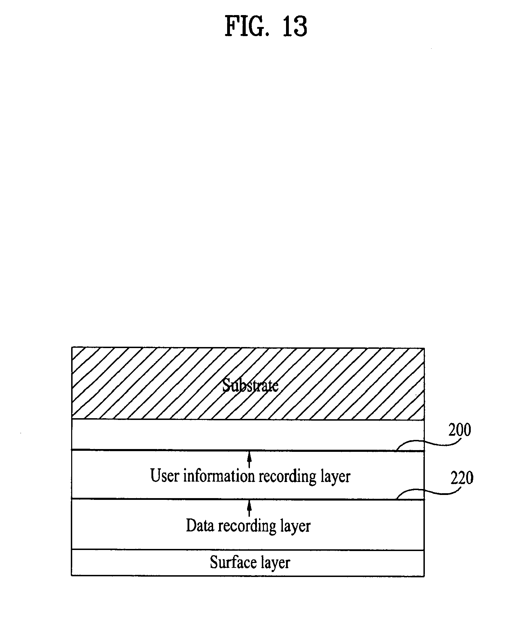

FIG. 13 illustrates a section of a recording medium in accordance with a preferred embodiment of the present invention. As shown in FIG. 13, a recording medium can include a plurality of recording layers. The plurality of recording layers include a data recording layer 220 for recording/reproducing a data thereon/therefrom, and a user finger print information recording layer 200 for securing security of the recording medium. The user finger print information recording layer 200 may have the user finger print information recorded thereon in an identical shape by a light-scribe system. Or, the user finger print information recording layer 200 may have the user finger print information processed into a data recorded thereon. Or, the user information recording layer 200 does not exist separately, but the user information can be recorded on the data recording layer 220.

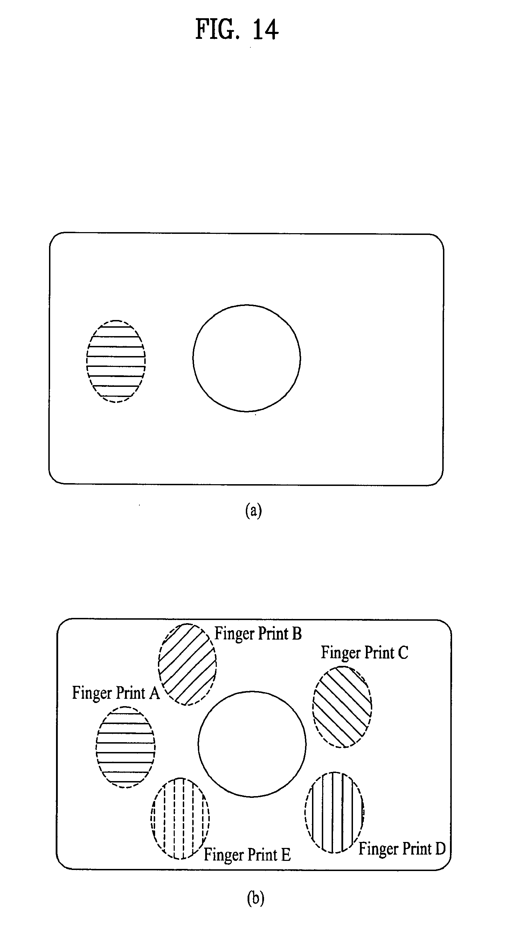

FIG. 14 illustrates a preferred embodiment of the present invention by using a recording medium of the present invention.

In a case of a data which requires security including a public key certificate and the like, a method for authenticating the user information is much more important. The security of the data which requires security including the public key certificate can be secured, if the data which requires security including the public key certificate is recorded on the data recording layer, and the user finger print information of an authenticated user is recorded on the user recording layer. And, if user finger print information on a plurality of users is recorded on the user recording layer, making access of the plurality of authenticated users possible, it can be favorable for securing interchangeability, too.

In the meantime, there can be two kinds of the recording media; one is a recording medium system which is provided in a state a data is recorded thereon for providing contents allowing reproduction of the data only, and the other one is a recording medium system which allows both data recording/reproducing.

Since the two recording medium systems have different methods for recording the data on the recording medium respectively, the two recording medium systems are required to approach to a method for differentiating the authenticated user different from each other, too.

(Embodiment 1)

In a case the recording medium system which is provided in a state a data is recorded thereon for providing contents allowing reproduction of the data only, the recording medium system provides contents which can be reproduced only by using user finger print information at the time of initial production of the recording medium and authentication software.

The user finger print information is registered on authentication software. In this case, by marking the initial finger print on the recording medium, and obtaining the user finger print information by using the RF signal, the user finger print information obtained thus can be recorded on the authenticated software as authenticated information, or the finger print information can be obtained and recorded by using an external device (for an example, a finger print applier).

In a method for approaching to the recording medium having the security given thereto by means of the recording/reproducing apparatus, if the finger print is marked on the recording medium, the user finger print information is obtained from the finger print marked thus by using the RF signal of the recording/reproducing apparatus, and the user finger print information is compared to the user finger print information registered on the authentication software in view of correlation to determine whether the two user finger print information is identical or not, thereby determining whether a data is reproduced or not.

(Embodiment 2)

In a case of the recording medium system which allows both data recording/reproducing, the user finger print information is registered on the recording medium. In this instance, by marking the initial finger print on the recording medium, and obtaining the initial finger print as the user finger print information by using the RF signal, the user finger print information can be recorded as the authenticated information on the recording medium, or the finger print information can be obtained and recorded by using an external device (for an example, the finger print applier).

And, the user finger print information can be recorded on the recording medium, or on an external device (for an example, a drive, a computer, authentication software, or so on).

A method for approaching to the recording medium having the security given thereto by means of the recording/reproducing apparatus is identical to the first embodiment. If the finger print is marked on the recording medium, the user finger print information is obtained from the finger print marked thus by using the RF signal, and the user finger print information is compared to the user finger print information registered already in view of correlation to determine whether the two user finger print information is identical or not, thereby determining whether a data is recorded or reproduced or not.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

**[INDUSTRIAL APPLICABILITY]**

The recording medium, and recording/reproducing method and recording/reproducing apparatus for a recording medium of the present invention can secure safety of security since a unique characteristic only of a specific user is used, is favorable in view of cost since the security can be secured by changing some parts of, or adding some parts to, a related art system only, and can be put into production quickly since the recording/reproducing apparatus of the present invention is interchangeable with an existing recording/reproducing apparatus.

## EP 2 306 459 A2

**Claims**

1. A method of recording/reproducing a data on/from a recording medium having a data recording layer and a user information recording layer, comprising the steps of:

   receiving user information;
   determining whether the received user information matches user information recorded on the user information recording layer; and
   recording/reproducing a data on/from the data recording layer based on the determining step.

2. The method of claim 1, wherein the user information is user finger print information.

3. The method of claim 2, wherein the step of receiving user information includes the step of marking a finger print on the recording medium.

4. The method of claim 2, wherein the step of receiving user information includes the step of receiving the finger print from a user information applier.

5. A method of recording /reproducing a data on/from a recording medium having a data recording layer and a user information recording layer, comprising the steps of:

   recording user information on the user information recording layer of the recording medium;
   applying current user information when to record/reproduce a data on/from the recording medium; and
   recording/reproducing the data on/from the data recording layer depending on whether the current user information matches user information recorded on the user information recording layer of the recording medium.

6. The method of claim 5, wherein the user information is user finger print information.

7. The method of claim 6, wherein the step of recording user information includes the steps of;
   receiving the user finger print information from a user information applier, and
   recording the received finger print information on the user information recording layer of the recording medium.

8. The method of claim 6, wherein the step of recording the finger print information includes the steps of;
   marking the finger print on the recording medium,
   obtaining the finger print information by processing the marked finger print using a signal, and
   recording the finger print information on the user information recording layer of the recording medium.

9. The method of claim 8, wherein the signal is a RF signal.

10. An apparatus for recording/reproducing on/from a recording medium having a data recording layer and a user information recording layer, comprising:

    a pick-up unit configured to record/reproduce a data and user information, and to retrieve received user information on the recording medium; and
    a control unit configured to control the pick-up unit to determine whether the user information matches user information recorded on the user information recording layer, and to record/reproduce the data on/from the data recording layer based on a result of determination.

11. The apparatus of claim 10, wherein the user information is user finger print information.

12. An apparatus for recording/reproducing a data on/from a recording medium having a data recording layer and a user information recording layer, comprising:

    a pick-up unit configured to record/reproduce a data and user information on/from the recording medium;
    a user information input unit configured to receive user information; anda control unit configured to control the pick-up unit to determine whether the user information received from the user information input unit matches user information recorded on the user information recording layer and to record/reproduce the data on/from the data recording layer based on a result of determination.

11

**13.** The apparatus of claim 12, wherein the user information is user finger print information.

**14.** An for recording/reproducing on/from a recording medium having a data recording layer and a user information recording layer, comprising:

a pick-up unit configured to record/reproduce a data and a user information; and
a control unit configured to control the pick-up unit based on whether user information recorded on the user information recording layer of the recording medium matches received user information, to record/reproduce the data on/from the data recording layer of the recording medium.

**15.** The apparatus of claim 14, wherein the user information is user finger print information.

**16.** The apparatus of claim 15, further comprising:

a user information input unit configured to receive user information.

**17.** The apparatus of claim 16, wherein the control unit is configured to control the pick-up unit to receive the user finger print information by using the user information input unit and record the received finger print information on the user information recording layer of the recording medium.

**18.** The apparatus of claim 15, wherein the control unit is configured to control the pick-up unit to obtain finger print information by processing the marked finger print using a signal, and to record the finger print information on the user information recording layer of the recording medium.

**19.** A recording medium having a plurality of recording layers, comprising:

a data recording layer for recording/reproducing a data thereon/therefrom; and
a user information recording layer for recording/reproducing user information thereon/therefrom.

**20.** The recording medium of claim 19, wherein the user information is user finger print information.

**21.** A method of recording/reproducing on/from a recording medium comprising the steps of:

registering user information on a recording medium;
receiving user information at the recording medium when a data is recorded/reproduced on/from the recording medium;
determining whether the received user information matches the registered user information on the recording medium; and
determining whether the data is recorded/reproduced on/from the recording medium based on whether the user information is matched.

**22.** The method of claim 21, wherein the step of registering user information on a recording medium includes the steps of;
receiving finger print information from a user information applier, and
storing the received finger print information in the recording medium.

**23.** The method of claim 21, wherein the step of registering user information on a recording medium includes the steps of;
marking a finger print on the recording medium, and
processing the finger print using a signal and storing the signal in the recording medium as finger print information.

**24.** A method of recording/reproducing on/from a recording medium comprising the steps of:

registering user information on an authentication software;
receiving user information at the recording medium when a data is recorded/reproduced on/from the recording medium;
determining whether the received user information matches user information registered on the authentication software; and
determining whether the data is recorded/reproduced on/from the recording medium based on whether the user information is matched.

**25.** A apparatus for recording/reproducing on/from a recording medium comprising:

a pick-up unit configured to register user information on the recording medium and recognize the registered user information on the recording medium when to record/reproduce on/from the recording medium; and a control unit configured to determine whether received user information matches the registered user information on the recording medium, and determining whether to record/reproduce a data on/from the recording medium based on whether the user information is matched.

**26.** The apparatus of claim 25, wherein the registration of user information on the recording medium is reception of finger print information from an external device and storage of the finger print information received thus on the recording medium.

**27.** The apparatus of claim 25, wherein the registration of user information on the recording medium is marking a finger print on the recording medium, processing the marked finger print using a signal, and recording the signal on the recording medium as finger print information.

**28.** An apparatus for recording/reproducing a data on/from a recording medium comprising:

a pick-up unit configured to register user information on an authentication program and recognize user information inputted to the recording medium when a data is recorded/reproduced on/from the recording medium; and a control unit configured to determine whether the recognized user information match the user information registered on the authentication program, and determine whether to record/reproduce the data on/from the recording medium depending on whether the two pieces of user information are identical or not.

# FIG. 1

# FIG. 2

# FIG. 3

# FIG. 4

Disc

Move a Sled

Fix an Actuator

(a)

Disc

Move a sled later

Move an actuator at first

(b)

# FIG. 5

# FIG. 6

Signal value [V]

Data

Finger print

Moving direction
of a pickup unit

Surface

Data

FES

Surface layer
of a recording medium

Data recording
layer

Inside of
a recording

# FIG. 7

Signal value [V]

Data

Finger print

Moving direction of a pickup unit

Finger print

Surface

Surface layer of a recording medium

Inside of a recording medium

# FIG. 8

# FIG. 9

Start

Apply user finger print information — S10

Load a recording medium — S20

S30

Determine whether the finger print information applied thus is identical to information stored in a user information recording layer of the recording medium or not ?

No

Yes

S50 — Refuse recording/reproducing of a data

Record/reproduce a data — S40

End

# FIG. 10

Start

S12

Apply finger print information to a sensor unit

Load a recording medium — S22

S32

Determine whether the finger print information applied thus is identical to user information stored in a user information recording layer or not ?

No

Yes

S52 — Refuse recording/reproducing of a data

Record/reproduce a data — S42

End

# FIG. 11

```
          ┌─────────────────┐
          │      Start       │
          └─────────────────┘
                   │
                   ▼
  ┌───────────────────────────────────┐
  │ Apply finger print information to  │
  │ a surface                          │──── S15
  │ of a recording medium.             │
  └───────────────────────────────────┘
                   │
                   ▼
  ┌───────────────────────────────────┐
  │ Specify a pattern of a RF signal   │
  │ of the                             │──── S25
  │ finger print information.          │
  └───────────────────────────────────┘
                   │
                   ▼
  ┌───────────────────────────────────┐
  │ Record the specified pattern on    │
  │ a user information recording layer.│──── S35
  └───────────────────────────────────┘
                   │
                   ▼
          ┌─────────────────┐
          │       End        │
          └─────────────────┘
```

# FIG. 12

```
        ┌─────────────┐
        │    Start     │
        └──────┬──────┘
               │
               ▼
┌───────────────────────────────────────────┐
│ Apply finger print information to a sensor unit │ ── S17
└───────────────────────┬───────────────────┘
                        │
                        ▼
┌───────────────────────────────────────────┐
│ Record the finger print information applied thus │ ── S27
│   to a user information recording layer.   │
└───────────────────────┬───────────────────┘
                        │
                        ▼
        ┌─────────────┐
        │     End      │
        └─────────────┘
```

# FIG. 13

Substrate

200

User information recording layer

220

Data recording layer

Surface layer

# FIG. 14

(a)

Finger Print B

Finger Print C

Finger Print A

Finger Print E

Finger Print D

(b)